# EUROPÄISCHE PATENTSCHRIFT

(11) **EP 2 316 007 B1**
(45) Veröffentlichungstag und Bekanntmachung des Hinweises auf die Patenterteilung: **08.11.2017**
(21) Anmeldenummer: 09782124.3
(22) Anmeldetag: 24.08.2009
(51) Int. Cl.: G01D 4/02, G01F 1/075, G01F 1/115, G01K 17/08, F24D 19/10

(54) **VERFAHREN UND ANORDNUNG ZUR ERMITTLUNG DES RESSOURCEN-VERBRAUCHES**
METHOD AND APPARATUS FOR DETERMINING RESOURCE CONSUMPTION
PROCÉDÉ ET DISPOSITIF DE DÉTERMINATION DE LA CONSOMMATION EN RESSOURCES

(30) Priorität: 23.08.2008 DE 102008039272
(43) Veröffentlichungstag der Anmeldung: 04.05.2011
(73) Patentinhaber: Amphiro AG, 8092 Zürich (CH)
(72) Erfinder: STAAKE, Thorsten, 63571 Gelnhausen (DE); STIEFMEIER, Thomas, 61203 Reichelsheim (DE)
(74) Vertreter: Epping - Hermann - Fischer
(86) Internationale Anmeldenummer: PCT/EP2009/060887
(87) Internationale Veröffentlichungsnummer: WO 2010/026071

(56) Entgegenhaltungen:
- GB-A- 2 434 207
- JP-A- 2005 147 721
- US-A- 4 363 441
- US-A1- 2008 110 279

## Beschreibung

Die vorliegende Erfindung betrifft ein Verfahren und eine Anordnung zur Ermittlung eines Ressourcen-Verbrauches.
Die Bereitstellung von Kalt- und Warmwasser erfordert sowohl auf Seiten der Versorgungsunternehmen als auch auf Seiten der Endverbraucher einen erheblichen Einsatz von natürlichen Ressourcen. Energieintensiv sind insbesondere der Betrieb von Wasseraufbereitungsanlagen, Pumpstationen und Kläranlagen sowie die Bereitung von Warmwasser. Bedingt durch dessen hohe spezifische Wärmespeicherkapazität 4,183 J Kg-1 K-1 werden bereits bei zahlreichen alltäglichen Tätigkeiten große Energiemengen aufgewendet; so erfordert eine vierminütige, warme Dusche häufig mehr als 1,5 kWh an zuzuführender Wärmeenergie, die meist durch fossile Brennstoffe oder durch elektrische Energie bereitgestellt wird. In den Ländern Europas und Nordamerikas stellt die Wassernutzung einen erheblichen Anteil des gesamten Primärenergieverbrauches dar, was nach dem heutigen Stand der Technik Treibhausgasemissionen und Kosten in erheblicher Höhe nach sich zieht.
Trotz des wachsenden Umweltbewusstseins sind vielen Verbrauchern die Zusammenhänge zwischen Wasser- und Energieverbrauch nur unzureichend bekannt. Wasser wird zwar vom überwiegenden Teil der Bevölkerung als kostbare Ressource angesehen, der Wasserverbrauch jedoch nur selten mit der Emission von Treibhausgasen und dem Einsatz von nichterneuerbaren Ressourcen in Verbindung gesetzt und somit nicht in die Bemühungen zum Klimaschutz mit einbezogen. Darüberhinaus fehlt den Verbrauchern die Möglichkeit, einzelne Entnahmevorgänge hinsichtlich des Ressourcen-Verbrauchs zu bewerten. Monatliche oder sogar jährliche Abrechnungszyklen der Nebenkosten bieten nur wenig Aufschluss über die Ressourcenintensität einzelner Tätigkeiten; installierte Wasser-, Strom-, Gas-, Wärme- und Elektrizitätszähler lassen ebenfalls nur unzureichende Schlüsse auf einzelne Anwendungen zu. Ein weiterer Nachteil der bekannten Systeme resultiert aus dem Fehlen einer automatischen Erkennung von zusammenhängenden Entnahmevorgängen und der Zusammenfassung einzelner, zusammenhängender Messwerte zu Kenngrößen, welche abgeschlossene Tätigkeiten charakterisieren. Darüber hinaus werden die durch eine Warmwasserentnahme hervorgerufenen Ressourcen-Verbräuche an mehreren Messstellen erfasst, etwa am Wasserzähler und am Gaszähler, und müssten vom Verbraucher getrennt abgelesen, bewertet und zusammengefasst werden. Die Zusammenfassung in einfach zu interpretierende Kenngrößen ist den meisten Verbrauchern nicht möglich und insbesondere bei kurzen Entnahmevorgängen, etwa nach dem Waschen der Hände, zu aufwändig. Weiter berücksichtigen bestehende Systeme nicht den Energieaufwand, der für die Bereitstellung von Wasser außerhalb des Verantwortungsbereiches des Abnehmers aufzubringen ist, etwa für Pumpstationen. Folglich bleibt eine unmittelbare Bewertung des Verhaltens in den meisten Fällen aus, und die bestehenden Systeme führen lediglich zu marginalen Verhaltensänderungen.

Neben der eingeschränkten Funktionalität erfordern die meisten Systeme eine externe Stromversorgung oder eine Batterie und sind auf Grund ihrer Abmessungen nicht für eine Montage direkt an der Entnahmestelle geeignet, insbesondere wenn der Verbraucher gehobene Ansprüche an die Ästhetik der Installation geltend macht. Eine externe Stromversorgung erschwert insbesondere die Installation im Nassbereich, eine interne Batterie ist unter Gesichtspunkten des Umweltschutzes nicht wünschenswert.

Dokumente EP 1308701A2; US 3,342,070; EP 0288448A1; EP 0950877A2; US 5,721,383; US 4,885,943; WO 2008018836 und EP 0990877A2 beschreiben Geräte zur Erfassung von Durchflussmengen. EP 1858144A2 beschreibt eine Architektur mit verbesserter Ausfallsicherheit bezüglich der Stromversorgung. In US 6,612,188 wird die Ausnutzung des Wiegand Effekts als Magnet Sensor in einem Gerät zur Erfassung einer Durchflussmenge gezeigt. Der Wiegand Effekt erfordert eine Verwendung teuren Materials und ist daher von Nachteil. In EP 1884292A1 wird eine Meßvorrichtung beschrieben, die den Wasserverbrauch an einem Gartensprenkler oder einem Wasserhahn erfasst und steuert.

Ein Gerät zur Ermittlung der in einem Medium transportierten Wärmemenge ist in DE 102004054118 beschrieben. Das Gerät erfasst hierzu die Durchflussmenge des Mediums sowie die Temperatur vor und nach dem Wärmetransfer. Charakteristisch für Wärmemengenmessgeräte dieses Typs ist die Messung der Temperatur an zwei Orten, was den Aufbau verkompliziert. In WO 2007/053091 A1 wird ein Gerät zur getrennten Erfassung der für Brauchwasser und für Wasser in Heizkörpern benötigten Energiemenge angegeben. Dokument GB 2434207 A befasst sich mit einem Wasser- und Energiekostenanzeigesystem für Haushaltsanwendungen. Das System weist Temperatursensoren auf. Eine Elektronik des Systems kann mit Hilfe einer Turbine im Wasserstrom mit Energie versorgt werden.

In Dokument US 4,363,441 ist ein Messsystem zur Bestimmung des thermischen Energieverbrauchs in einem Gebäude dargestellt. Dokument US 2008/0110279 A1 beschreibt ein System zur Anzeige des Wasser- und des Energieverbrauchs. In Dokument JP 2005-147721 ist ein System zur Anzeige der verbrauchten Wassermenge an einem Wasserhahn angegeben. Dokument
US 4,936,508, betrifft ein Volumenmesssystem in einem Duschkopf. Das System umfasst eine Turbine und eine Spule, die elektrische Pulssignale generiert, deren Rate der Wasserdurchflussrate entspricht. Ein Mikrocontroller analysiert die Pulssignale. Die Spule wird weiter zur Bereitstellung elektrischer Energie für den Mikrocontroller verwendet.

Bei einer Anwendung verwandter Geräte als Verbrauchs-Informationssysteme am Ort der Wasserentnahme bestehen bei den existierenden Geräten Nachteile insbesondere durch fehlende Mechanismen zur Erkennung zusammenhängender Entnahmevorgänge; durch eine mangelhafte Möglichkeit der Zuordnung von Verbrauchsinformationen zu einzelnen Entnahmevorgängen; durch eine unzureichende Aggregation von Messwerten zu einer den Entnahmevorgang charakterisierenden Kenngröße; durch fehlende Angaben zu den durch die Entnahme hervorgerufenen Treibhausgasemissionen; durch den hohen eine Installation betreffenden Aufwand bzgl. der Ermittlung der Wassertemperatur vor der Warmwasseraufbereitung zur Bestimmung der aufgewendeten Wärmeenergiemenge; durch die räumliche Entfernung von Anzeige und Stelle der Benutzerinteraktion beziehungsweise der Steuerung der Wasserentnahme; durch das Fehlen von anwendungs- und situationsbezogenen Angaben zur Bewertung des Verhaltens; sowie durch die Verwendung aufwändiger Vorrichtungen zur Energieversorgung.

Der Erfindung kann unter anderem beispielsweise die Aufgabe zugrunde liegen, den Ressourcen-Verbrauch einschließlich Wasserverbrauch, Energieverbrauch zur Bereitung von Warmwasser, Aufwand für Pumpen, etc., für Entnahmevorgänge von warmem oder kaltem Wasser zu erfassen, diesen einzelnen Entnahmevorgängen zuzuordnen, die daraus resultierenden Kenngrössen bezüglich Kosten und umweltrelevanter Einflüsse, wie beispielsweise Wasservolumina, Energiemengen, Treibhausgasemissionen etc., zu ermitteln und am Ort der Entnahme oder am Ort der Steuerung eines solchen Entnahmevorganges zu visualisieren und die Bewertung des eigenen Verhaltens zu unterstützen sowie Anreize für ein umweltschonendes und kostensparendes Verhalten zu schaffen. Darüber hinaus liegt der Erfindung die Aufgabe zugrunde, ein Gerät zu entwickeln, das keine externe Spannungsversorgung oder externe Sensoren benötigt, um den Aufwand bei der Installation zu reduzieren, sowie bezüglich Baugröße und Bauform auch unter ästhetischen Gesichtspunkten einfach in bestehende Installationen etwa in Küche, etwa am Wasserhahn der Spüle, und Bad, etwa am Wasserhahn des Waschbeckens, der Badewanne oder der Dusche, zu integrieren ist.

Aufgabe der Erfindung ist es, ein Verfahren und eine Anordnung bereitzustellen, um einen Ressourcen-Verbrauch kostengünstig zu erfassen.

Diese Aufgabe wird mit der Anordnung mit den Merkmalen gemäß Patentanspruch 1 sowie mit dem Verfahren gemäß Patentanspruch 8 gelöst. Weiterbildungen und Ausgestaltungen sind jeweils Gegenstand der abhängigen Ansprüche.

Die im Folgenden beschriebene Erfindung vereinfacht die Messung, Ermittlung und Anzeige von Informationen über die Verwendung von warmem und kaltem Wasser, welche den Konsumenten unterstützen oder motivieren, den durch die Wassernutzung hervorgerufenen Ressourcen-Verbrauch sowie die damit verbundene Emissionen von Treibhausgasen zu reduzieren. Diese Informationen umfassen, alleine oder in Kombination, Angaben zu entstandenen Kosten, verbrauchten Wasservolumina, erforderlichen Energiemengen, entstandenen Treibhausgasemissionen sowie Angaben zu Vergleichen mit ähnlichen Benutzergruppen und die Darstellung von Trends bezüglich des Verbrauchsverhaltens. Die Informationen werden sowohl fortlaufend während der Wasserentnahme als auch für zusammengehörende Entnahmevorgänge in aggregierter Form ermittelt und angezeigt. Die Anzeige erfolgt in unmittelbarer räumlicher Nähe zu der die Entnahme steuernden Vorrichtung, also etwa am Wasserhahn in Küche, Bad oder Garten, dem Duschkopf oder dem Duschschlauch, der Mischbatterie etc.

Hierzu misst das Gerät die Durchflussmenge und die Temperatur des Fluides. Zur Bestimmung der Durchflussmenge dient ein Turbinenrad, das aus magnetisiertem Material hergestellt ist oder das mechanisch mit einem oder mehreren Permanentmagneten verbunden ist. Bei einer Wasserentnahme wird das Turbinenrad in eine Rotationsbewegung versetzt und erzeugt ein wechselndes magnetisches Feld in einer oder mehreren Spulen. Der charakteristische Verlauf der resultierenden Spannung dient als Indikator für die Drehfrequenz und nach einer Umrechnung für die Durchflussmenge. Weiter kann die induzierte Spannung als Energiequelle für das Gerät genutzt werden, was einen Verzicht auf eine Batterie oder größere Speicherkondensatoren gestattet. Die Bestimmung der Wärmemenge, die für eine mögliche Erwärmung des Wassers aufgebracht wurde, erfolgt auf Basis eines einzelnen Temperatursensors und eines Mikrokontrollers, die beide im Gerät untergebracht sind, und einem weiter unten beschriebenen Verfahren zur Abschätzung der Wassertemperatur vor der Erwärmung. Die Berechnung der auf die Entnahme zurückzuführenden Kosten und umweltrelevanten Größen erfolgt durch eine Bewertung der aufgebrachten Energiemenge, wenn erforderlich unter Berücksichtigung der Art der Energieumwandlung wie etwa Nutzung elektrischer Energie gegenüber direkte Nutzung fossiler Brennstoffe gegenüber Nutzung von Sonnenkollektoren, sowie einer Bewertung der entnommenen Wassermenge, wobei insbesondere bei der Berechnung der Treibhausgasemissionen auch die Emissionen, die im Rahmen der Bereitstellung von kaltem Wasser oder der Entsorgung von Abwasser entstehen, wie etwa beim Versorgungsunternehmen, Berücksichtigung finden. Die hierfür notwendigen Faktoren sind im Speicher des Mikrokontrollers abgelegt.

Die Gruppierung einzelner Wasserentnahmen zu zusammenhängenden Entnahmevorgängen erfolgt mit Hilfe eines Mikrokontrollers über die Auswertung der Dauer einzelner Wasserentnahmen und die zeitlichen Abstände zwischen zwei oder mehr als zwei Entnahmen. Zwischen zwei Entnahmevorgängen ist bei einer Verwendung des Turbinenrades zur Spannungserzeugung unter Umständen nicht genügend Energie verfügbar, um einen low-cost Zeitgeber zu betreiben. Als Zeitbasis kann hier die gemessene Temperaturänderung vor dem Abschalten und unmittelbar nach dem erneuten Einschalten dienen; alternativ kann die Spannungsdifferenz an einem Kondensator zur Auswertung herangezogen werden. Die oben aufgeführten Verbrauchsinformationen können so für zusammenhängende Entnahmevorgänge zusammengefasst in aggregierter Form angezeigt werden und erfordern so keine Rechenoperationen seitens des Benutzers. Als Beispiel würde das kurzzeitige Öffnen des Wasserhahns zum Befeuchten der Zahnbürste und das erneute Öffnen zum Ausspülen des Mundes und Reinigen der Zahnbürste zu einem Entnahmevorgang zusammengefasst werden, das Waschen der Hände eine halbe Stunde später aber eine neue Messung, beispielsweise mit zurückgesetztem Zählerstand, auslösen.

Häufig sind nicht alle ermittelten Verbrauchsinformationen von Interesse oder es können aus technischen Gründen nur eine Auswahl angezeigt werden. In diesem Falle lässt sich häufig aus dem zeitlichen Verlauf der Durchflussmenge und Temperatur das Interesse des Benutzers ableiten. Das Gerät erkennt charakteristische Verläufe der Messgrößen, ordnet diese dem wahrscheinlichsten Kontext zu wie etwa Hände waschen, duschen, Garten bewässern, Wassermenge abmessen etc. und wählt den für diesen Kontext definierten Anzeigemodus. So lässt zum Beispiel eine langsame Reduktion der Flusses des Fluides nach einem abrupten öffnen eines Ventiles "Einschaltvorgang" auf einen Abmess-Vorgang schließen, bei dem das Volumen des seit dem abrupten Einschaltvorgang entnommenen Fluides mit hoher Wahrscheinlichkeit von primären Interesse ist, weshalb bevorzugt Informationen zu ebendieser entnommenen Wassermenge angezeigt wird.

Weiter kann das Gerät bei Bedarf mit einer Kommunikationsschnittstelle und einem nichtflüchtigen Datenspeicher ausgestattet werden.

In einer Ausführungsform eines Verfahrens zur Ermittlung eines Signals zur Angabe des Ressourcen-Verbrauchs wird eine Fluidmenge eines Fluid ermittelt, das an einem Entnahmeort während einer Entnahmeeinheit entnommen wird. Das Signal zur Angabe des Ressourcen-Verbrauchs wird in Abhängigkeit der während der Entnahmeeinheit ermittelten Fluidmenge ermittelt.

In einer Ausführungsform wird eine Temperatur des entnommenen Fluids als Ist-Temperatur ermittelt. Das Signal zur Angabe des Ressourcen-Verbrauchs kann in Abhängigkeit der während der Entnahmeeinheit ermittelten Fluidmenge sowie zusätzlich in Abhängigkeit der während der Entnahmeeinheit ermittelten Ist-Temperatur ermittelt werden.

Das Fluid kann Wasser umfassen.

Alternativ kann der Ressourcen-Verbrauchswert aus der Differenz zwischen der Ist-Temperatur und einer Grundtemperatur ermittelt werden.

Der Ist-Temperaturwert kann pro Zeiteinheit ermittelt werden. Das Signal zur Angabe des Ressourcen-Verbrauchs kann in Abhängigkeit der während der Entnahmeeinheit ermittelten Fluidmenge und der pro Zeiteinheit ermittelten Ist-Temperaturwerte ermittelt werden.

In einer Ausführungsform des Verfahrens zur Ermittlung des Ressourcen-Verbrauchs bei der Nutzung eines einem Entnahmeort entnommenen Fluids, insbesondere von Wasser, unter Berücksichtigung einer Fluidmenge und dieser zugeordneter Temperaturwerte, wird zur Ermittlung des Ressourcen-Verbrauchs die dem Entnahmeort während einer Entnahmeeinheit entnommene Fluidmenge ermittelt. Dabei wird der Entnahmeeinheit entweder die Fluidmenge eines Einzelentnahmevorgangs oder die Fluidmenge eines sich aus mehreren Einzelentnahmevorgängen zusammensetzenden Gesamtentnahmevorgangs zu Grunde gelegt. Der Gesamtentnahmevorgang wird dann berücksichtigt, wenn die Einzelentnahmevorgänge in einem zeitlichen Abstand erfolgen, der kleiner als ein vorgegebenes Zeitfenster ist. Jeder Einzelentnahmevorgang wird in Zeiteinheiten zugeordnete Teilentnahmevorgänge unterteilt. Für jeden Teilentnahmevorgang wird eine mittlere Temperatur des entnommenen Fluids als Ist-Temperatur ermittelt. Aus der Differenz zwischen der Ist-Temperatur und einer Grundtemperatur wird ein Temperaturwert pro Zeiteinheit ermittelt. Aufgrund der während der Entnahmeeinheit gemessenen Fluidmenge sowie der während der Entnahmeeinheit ermittelten Temperaturwerte wird der Ressourcen-Verbrauch ermittelt.

Eine Entnahmeeinheit kann ein Einzelentnahmevorgang sein.

Alternativ kann eine Entnahmeeinheit ein Einzelentnahmevorgang oder, sofern die Einzelentnahmevorgänge in einem zeitlichen Abstand erfolgen, der kleiner als ein vorgegebenes Zeitfenster ist, ein Gesamtentnahmevorgang sein, der sich aus mehreren Einzelentnahmevorgängen zusammensetzt. Die Fluidmenge kann die Fluidmenge des Einzelentnahmevorgangs beziehungsweise die Fluidmenge des Gesamtentnahmevorgangs sein.

In einer Ausführungsform umfassen die Informationen Angaben zu der bei der Bereitstellung von kaltem Wasser aufgewendeten Energiemenge, insbesondere bezüglich der Energiemenge für Wasserförderung, Reinigung, Verteilung oder Aufbereitung oder Kombinationen daraus.

In einer Ausführungsform umfassen die Informationen Angaben zur gesamten, zur Bereitstellung des entnommenen Wassers aufgewendeten Energiemenge.

In einer Ausführungsform umfassen die Informationen Angaben zu den resultierenden Treibhausgasemissionen.

In einer Ausführungsform alterniert die Anzeige zwischen den oben- oder untenstehend aufgeführten Informationen oder einer Auswahl daraus.

In einer Ausführungsform werden einzelne oben- oder untenstehend aufgeführte Informationen automatisch anhand der Durchflussmenge, der zeitlichen Änderung der Durchflussmenge oder der Wassertemperatur ausgewählt.

In einer Ausführungsform ist zum Betrieb keine externe elektrische Energiequelle oder interne Batterie erforderlich.

In einer Ausführungsform werden die kosten- und die umweltrelevanten Informationen früherer Messungen oder anderer Benutzergruppen mit den Messwerten in ein Verhältnis gesetzt, um Vergleiche zu erleichtern.

In einer Ausführungsform können Trends beim Benutzerverhalten erkannt und angezeigt werden.

In einer Ausführungsform kann das Benutzerverhalten in Effizienzklassen eingeteilt werden.

In einer Ausführungsform kann das Verfahren mit Wasserstrahlreglern und Durchflussbegrenzern kombiniert werden.

In einer Ausführungsform umfasst eine Anordnung zur Ermittlung des Ressourcen-Verbrauchs einen Generator zur Erzeugung einer Ausgangsspannung mittels eines durch die Anordnung während einer Entnahmeeinheit fließenden Fluids, insbesondere Wasser, und eine Elektronikkomponente. Die Elektronikkomponente kann ausgelegt sein, aus der Ausgangsspannung des Generators eine Fluidmenge des durch die Anordnung während der Entnahmeeinheit fließenden Fluids zu ermitteln und in Abhängigkeit der Ausgangsspannung des Generators ein Signal zur Angabe des Ressourcen-Verbrauchs bereitzustellen.

In einer Ausführungsform ist die Elektronikkomponente dazu ausgelegt, der Entnahmeeinheit ein sich aus mehreren Einzelentnahmevorgängen zusammensetzender Gesamtentnahmevorgang zugrunde zu legen, wenn die Einzelentnahmevorgänge in einem zeitlichen Abstand erfolgen, der kleiner als ein vorgegebenes Zeitfenster ist.

Das Zeitfenster kann eine Zeit t mit t ≤ t2 sein, wobei eine Zeitdauer t2 aus der Gruppe mittlere Dauer des Zähneputzens, mittlere Dauer des Haarwaschens, mittlere Dauer des Einseifens festgelegt ist.

Als Zeitfenster kann eine Zeit t mit 1 sec ≤ t ≤ 5 min festgelegt sein.

In einer Ausführungsform wird das durch die Anordnung während einer Entnahmeeinheit fließende Fluid anschließend am Entnahmeort entnommen. Der Entnahmeort ist der Anordnung nachgeordnet.

In einer Ausführungsform umfasst die Anordnung einen Temperatursensor zur Abgabe eines Temperatursignals, welches von einer Temperatur des Fluids abhängt. Die Elektronikkomponente ist ausgelegt, in Abhängigkeit von dem Temperatursignal und der Ausgangsspannung des Generators das Signal zur Angabe des Ressourcen-Verbrauchs bereitzustellen.

In einer Ausführungsform ist die Elektronikkomponente ausgelegt, das Signal zur Angabe des Ressourcen-Verbrauchs in Abhängigkeit zusätzlich von einer Grundtemperatur bereitzustellen. Als Grundtemperatur ist eine gemessene niedrigste Temperatur während einer Anzahl M vorausgegangener Einzelentnahmevorgänge oder ein Basiswert festgelegt.

In einer Ausführungsform bei Wasser als Fluid wird als Basiswert die mittlere Temperatur festgelegt, die Wasser bei Abgabe an ein Versorgungsnetz aufweist.

Die Elektronikkomponente kann einen Mikrokontroller umfassen. Der Mikrokontroller kann ausgelegt sein, Einzelentnahmevorgänge zu einem Gesamtentnahmevorgang mittels einer Auswertung einer Dauer von Einzelentnahmevorgängen und der zeitlichen Abstände zwischen zwei oder mehr Einzelentnahmevorgängen zu gruppieren.

In einer Ausführungsform ist der Generator ausgelegt, die Ausgangsspannung des Generators derart zu erzeugen, dass die Ausgangsspannung des Generators die Elektronikkomponente betreiben kann.

In einer Weiterbildung umfasst der Generator ein Turbinenrad, das ausgelegt ist, von dem durch die Anordnung fließenden Fluid in eine Rotationsbewegung versetzt zu werden.

Das Turbinenrad kann aus magnetisiertem Material hergestellt sein. Alternativ kann das Turbinenrad mit mindestens einem Magnet verbunden sein. Der mindestens eine Magnet kann sich im Fluid befinden.

Weiter kann die Anordnung ein inneres Gehäuse umfassen. Der Generator kann mindestens eine Spule umfassen. Die mindestens eine Spule kann auf einer fluidabgewandten Seite des inneren Gehäuses derart angebracht sein, dass die mindestens eine Spule bei der Rotationsbewegung von einem wechselnden magnetischen Feld durchflossen ist. Das Turbinenrad kann zusammen mit dem mindestens einem Magnet im Inneren des inneren Gehäuse angeordnet sein und vom Fluid umspült sein.

In einer Ausführungsform umfasst die Anordnung ein Gehäuse. Das Gehäuse kann ein Gewinde oder eine Kupplung aufweisen, welches beziehungsweise welche zum Anschluss an einen Wasserhahn, einen Duschkopf, einen Duschschlauch, eine Mischbatterie, eine Wasserleitung oder einen Gartenschlauch ausgelegt ist.

In einer Ausführungsform kann die Anordnung ein Anzeigemodul umfassen. Das Anzeigemodul dient zur Anzeige des Signals zur Angabe des Ressourcen-Verbrauchs.

In einer Ausführungsform können die Dioden zur Beleuchtung der Anzeige mit Hilfe von Datenmodulationsverfahren vom Gerät erhobene Daten an ein externes Gerät übertragen.

In einer Weiterbildung umfasst die Anordnung ein Gleichrichtermodul zur Erzeugung einer Versorgungsspannung aus der Ausgangsspannung des Generators. Die mindestens eine Spule kann an das Gleichrichtermodul angeschlossen sein.

Eine Wasserentnahmevorrichtung, insbesondere ein Wasserhahn, ein Duschkopf, ein Duschschlauch, eine Mischbatterie, ein Gartenschlauch oder eine Wasserleitung kann eine Anordnung zur Ermittlung des Ressourcen-Verbrauchs umfassen.

In einer Ausführungsform ist die Anordnung zur Ermittlung des Ressourcen-Verbrauchs als Gerät ausgebildet.

Die Erfindung ist im Folgenden an mehreren Ausführungsbeispielen anhand der Figuren näher erläutert; es werden einzelne Module bzw. Funktionseinheiten beschrieben, wobei eine Verschiebung von Komponenten oder Funktionen in andere Module implizit in die Beschreibung eingeschlossen ist. Funktionsbeziehungsweise wirkungsgleiche Gebiete und Strukturen tragen gleiche Bezugszeichen. Es zeigen:
- Figur 1: einen schematischen Aufbau eines Gerätes beziehungsweise eines beschriebenen Verfahrens mit integrierter Anzeige an einem Beispiel,
- Figur 2: einen schematischen Aufbau des Gerätes beziehungsweise des beschriebenen Verfahrens mit separater Anzeige an einem weiteren Beispiel,
- Figur 3: einen als Sensor und Generator fungierenden Rotor des beschriebenen Gerätes beziehungsweise des beschriebenen Verfahrens an einem Beispiel,
- Figur 4: ein Blockdiagramm des in Figur 1 beschriebenen Gerätes beziehungsweise des beschriebenen Verfahrens mit integrierter Anzeige an einem Beispiel,
- Figur 5: ein Blockdiagramm des in Figur 2 beschriebenen Gerätes beziehungsweise des beschriebenen Verfahrens mit separater Anzeige an einem Beispiel,
- Figur 6: ein mögliches Schaltbild des Gleichrichter-Moduls mit der optionalen Konfiguration zur optischen Datenübertragung des in Figur 1 beschriebenen Gerätes beziehungsweise des beschriebenen Verfahrens an einem Beispiel,
- Figur 7: ein mögliches Schaltbild der Elektronik für das Gleichrichter-Modul und die optische Übertragung der gemessenen Informationen an eine separate Anzeige an einem Beispiel,

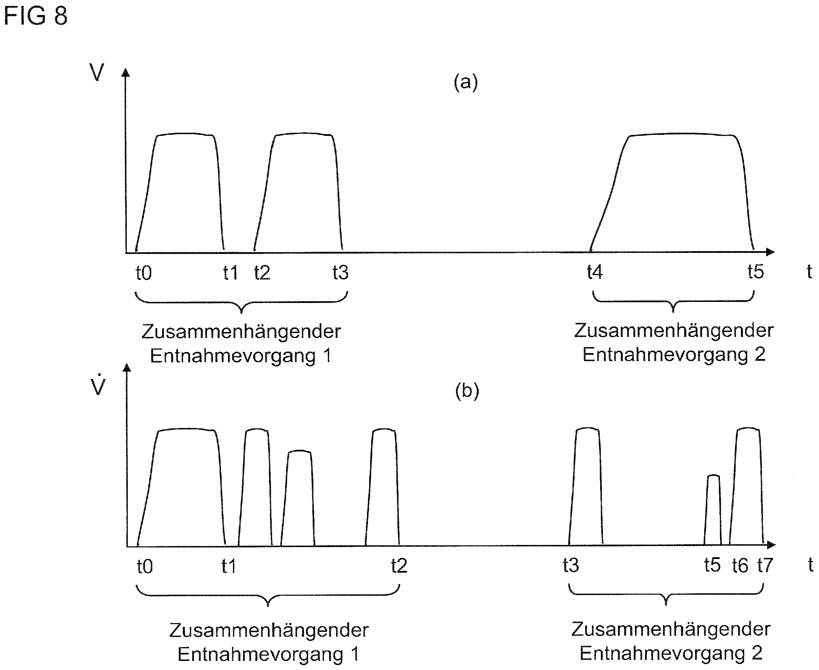

- Figur 8: mehrere beispielhafte Wasserentnahmen und deren Gruppierung in zusammenhängende Entnahmevorgänge und
- Figur 9: beispielhafte Abmessvorgänge, deren Gruppierung in zusammenhängende Entnahmevorgänge sowie den resultierenden Anzeigemodus.

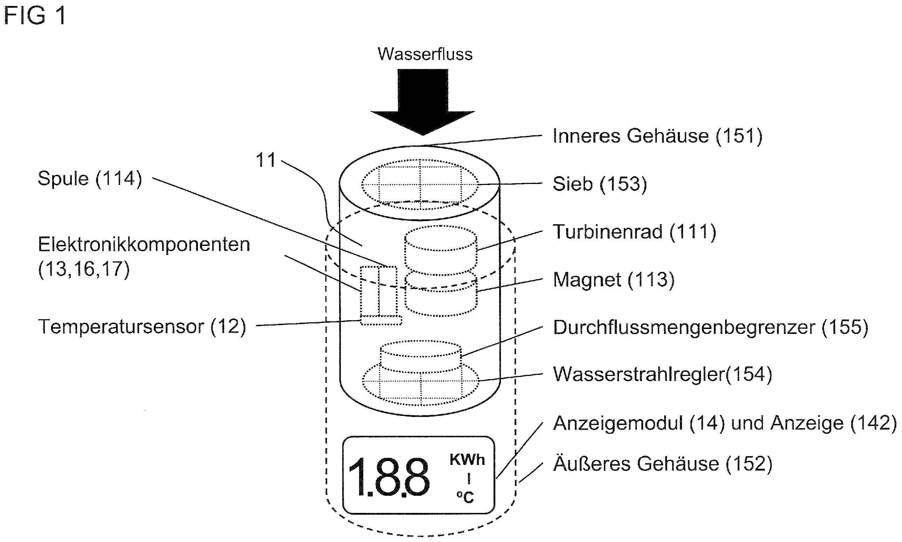

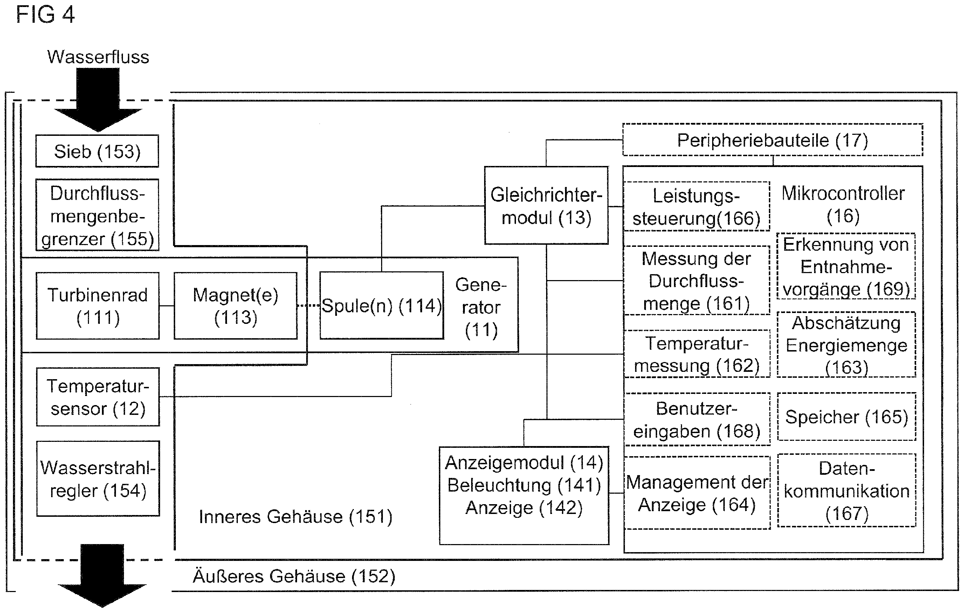

Wie in den Figuren 1 bis 5 skizziert, lässt sich das Gerät beziehungsweise Verfahren beschreiben über das Zusammenwirken eines Generators 11, dessen Ausgangsspannung sowohl als Indikator für die Durchflussmenge als auch zur Spannungsversorgung der elektronischen Komponenten dient; eines Temperatursensors 12; eines Gleichrichtermoduls 13 mit Glättungskondensatoren und Elementen zum Schutz vor Überspannung; eines Mikrokontrollers 16; eines internen oder externen Anzeigemoduls 14; und eines inneren und äußeren Gehäuses 151 und 152 mit, neben anderen Komponenten, einem Sieb 153, einem optionalen Wasserstrahlregler 154 sowie einem optionalen Durchflussbegrenzer 155.

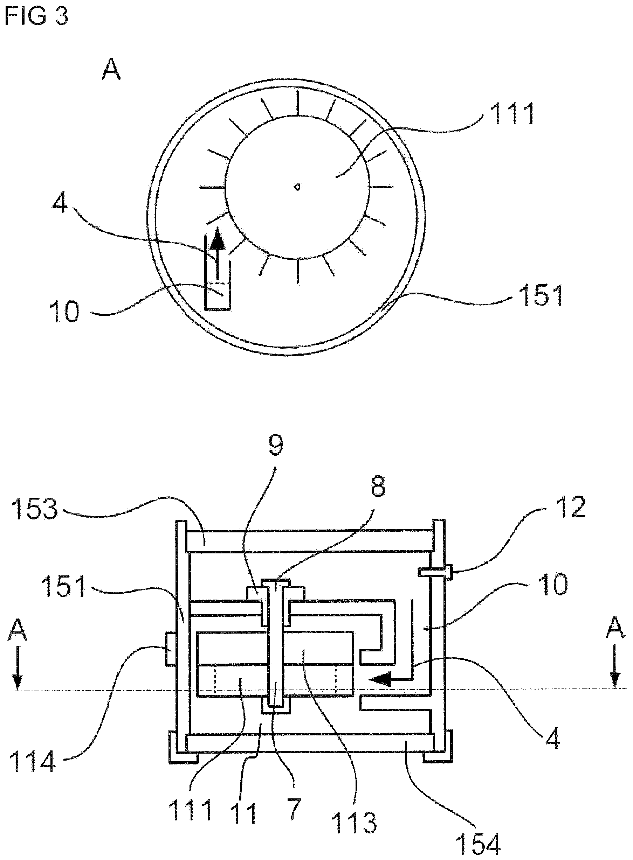

Der Generator 11 besteht aus einem Rotor/Turbinenrad 111, das vom das Gerät durchströmenden Wasser in eine Drehbewegung versetzt wird; in einer bevorzugten Konfiguration wird das Wasser über einen oder mehrere Kanäle 10 so umgelenkt, dass es das Turbinenrad 111 tangential anströmt, siehe insbesondere Figur 3; alternativ dazu kann ein Turbinenrad 111 verwendet werden, das vom Wasser parallel zur Achse angeströmt wird. Das Turbinenrad umfasst eine Welle 7, 8. Das Turbinenrad 111 ist reibungsarm gelagert, bevorzugt mit Hilfe eines Gleitlagers 9. In einer bevorzugten Konfiguration ist entweder der Rotor selbst diametral oder sektoriell magnetisiert oder mit entsprechenden Permanentmagneten mechanisch verbunden 113. Eine oder mehrere Spulen 114 sind auf der äußeren Seite des inneren Gehäuses 151 angebracht, so dass diese bei einer Drehbewegung des Rotors von einem wechselnden magnetischen Feld durchflossen werden. Bei einem Design, bei dem der Rotor aus n Polpaaren besteht oder mit einem Magnet 113 verbunden ist, der aus n Polpaaren besteht, werden bevorzugt 2n Spulen 114 so angebracht, dass die induzierten Spannungen der einzelnen Spulen 114 bei einer Serienschaltung zu einer 2n-fachen Spannung addiert werden können. Der Generator 11 ist so ausgelegt, dass bereits bei geringen Durchflussmengen eine Spannung erzeugt wird, deren Höhe zum Betrieb der elektronischen Komponenten ausreicht.

Der Temperatursensor 12, bevorzugt ein analoger PTC oder NTC oder ein integrierter Schaltkreis mit analogen oder digitalen Ausgang, ist so angebracht, dass die Temperatur des Mediums möglichst verzögerungsfrei erfasst werden kann.

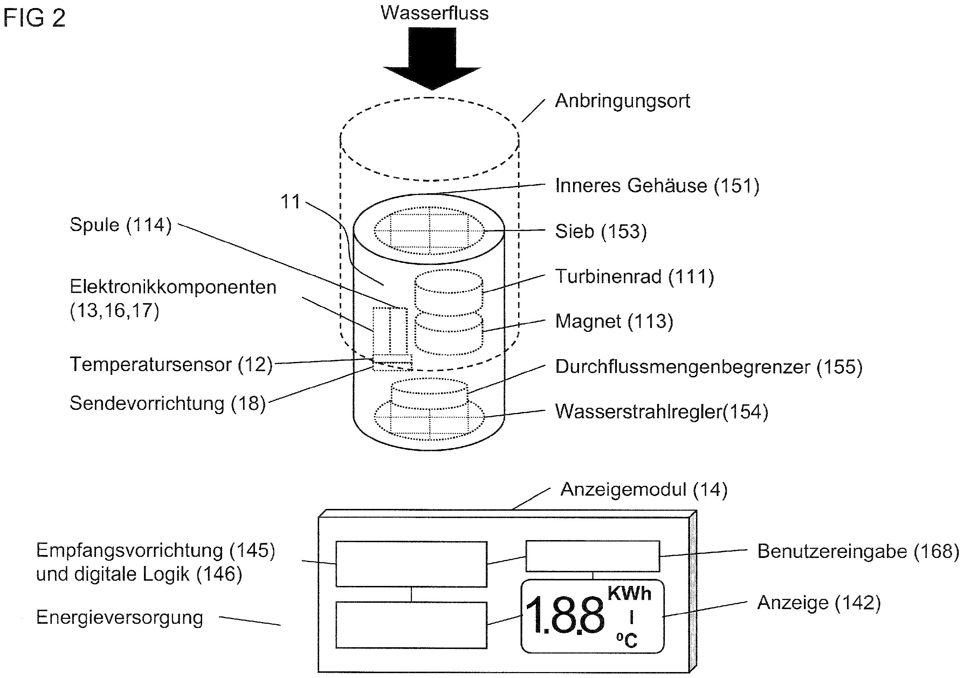

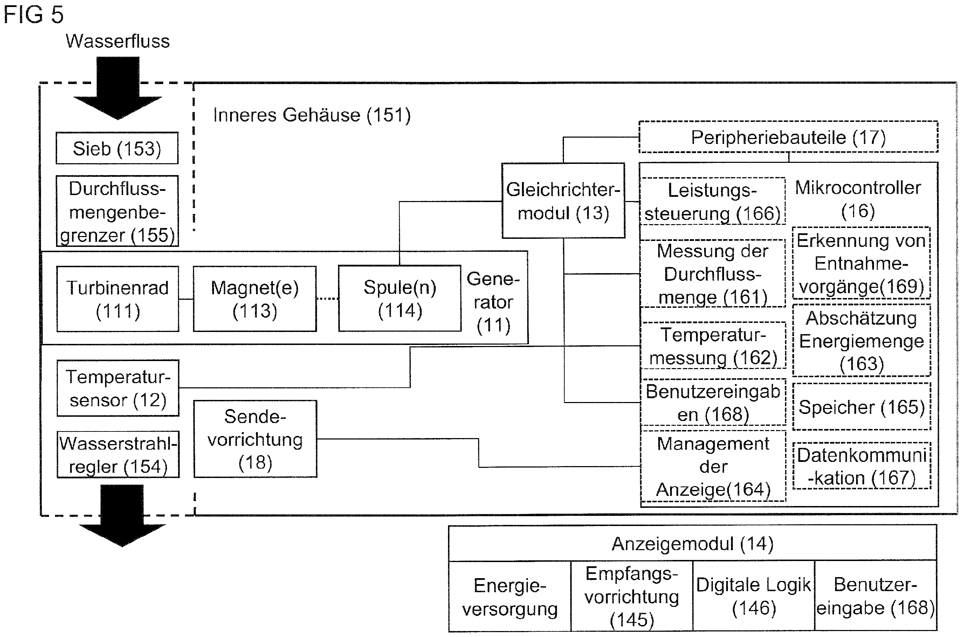

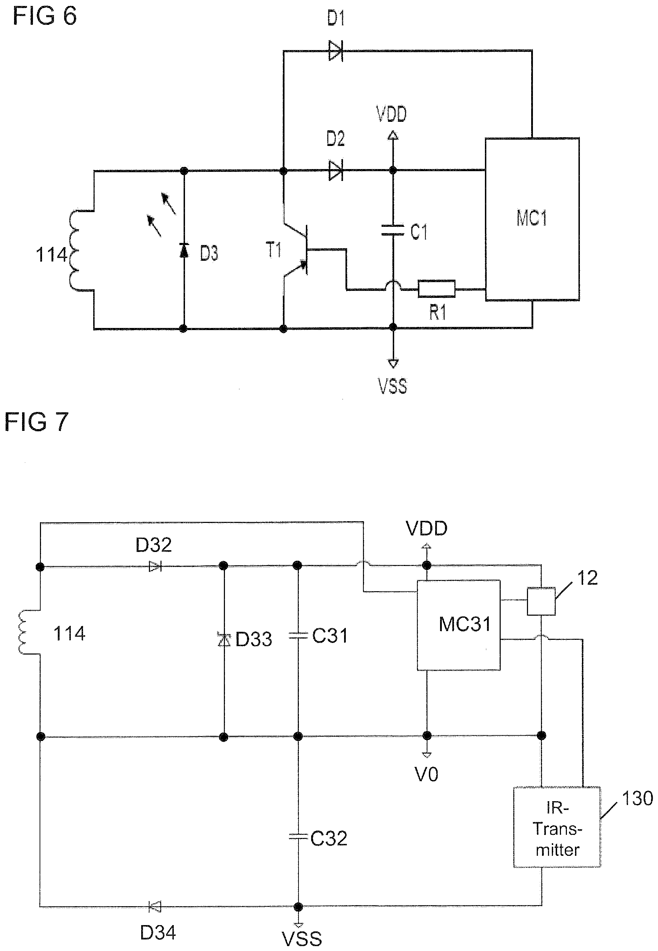

Das Gleichrichtermodul 13 besteht aus einer oder mehreren Dioden mit niedriger Verlustspannung D2, D32, D34, bevorzugt Schottky Dioden, und einem oder mehreren Glättungskondensatoren C1, C31, C32. Siehe auch Figuren 6 und 7. Wie bereits erwähnt ist der Generator 11 so ausgelegt, dass die erzeugte Spannung bereits bei niedrigen Durchflussmengen höher als die höchste minimale Versorgungsspannung der elektronischen Komponenten ist. Daraus resultiert bei hohen Durchflussmengen eine Versorgungsspannung VDD, die die elektronischen Komponenten beschädigen kann. Zum Schutz vor Überspannung werden vor den Gleichrichterdioden D2, D32, D34 Dioden mit einer Durchlassspannung grösser als die minimale Versorgungsspannung und kleiner als die maximal erwünschte Versorgungsspannung eingesetzt; in einer bevorzugten Konfiguration sind diese Dioden Leuchtdioden D3, abgekürzt LEDs, mit denen die später beschriebene Anzeige 14, englisch Display, beleuchtet wird 141 oder mit deren Hilfe der Wasserstrahl illuminiert wird. Alternativ dazu können Zenerdioden D33 eingesetzt werden. Beim oben beschrieben Einsatz der Leuchtdioden D3 vor den Gleichrichterdioden D2 ersetzt der Innenwiderstand des Generators 11 eine zusätzliche Strombegrenzung. Neben der Versorgungsspannung VDD stellt das Gleichrichtermodul 13 ein Signal zur Verfügung, aus dem die Rotationsfrequenz des Generators 11 abgeleitet werden kann. Bei der Verwendung eines externen Anzeigemoduls 14, siehe insbesondere Figuren 2 und 5, erfolgt die Gleichrichtung bevorzugt gemäß Figur 7, wobei eine Halbwelle des Generators 11 zur Versorgung einer Sendevorrichtung oder Sendemoduls 18 und die andere Halbwelle zur Versorgung insbesondere der digitalen Logik MC31 bzw. 16, 17 verwendet wird. Dies hat einen höheren Wirkungsgrad sowie die Möglichkeit, Logik und Sendeeinheit 18 mit unterschiedlichen Spannungsniveaus versorgen zu können, zum Vorteil. Das Gleichrichtermodul 13 gemäß Figur 7 umfasst einen IR-Übertrager 130, englisch IR Transmitter. Die digitale Logik MC31 ist als Mikrokontroller MC31 realisiert.

Das Gleichrichtermodul 13 gemäß Figur 6 weist eine weitere Diode D1 auf. Das Gleichrichtermodul 13 weist eine digitale Logik MC1 auf. Die digitale Logik MC1 ist als Mikrokontroller implementiert. Ein Transistor T1 wird von der digitalen Logik MC1 über einen Widerstand R1 angesteuert.

Als internes oder externes Anzeigemodul 14 dient eine numerische, alphanumerische oder dot-matrix Flüssigkristall- oder Leuchtdioden-Anzeige. Eine Beleuchtung bzw. Hintergrundbeleuchtung 141 erhöht den Ablese-Komfort und stellt bei einem internen Anzeigemodul 14 gleichzeitig einen Überspannungsschutz dar. Gemäß Figur 2 umfasst das externe Anzeigemodul 14 eine Empfangsvorrichtung 145 und eine Anzeige 142. Das externe Anzeigemodul 14 kann eine digitale Logik 146 aufweisen. Das externe Anzeigemodul 14 kann eine weitere Benutzereingabe 168 umfassen.

Das Gehäuse 151, 152 beinhaltet die elektronischen und mechanischen Komponenten und bietet gegeben Falles eine Halterung bzw. ein Sichtfenster für die Anzeige 142. Weiter ist das Gehäuse so aufgebaut, dass es die elektronischen Komponenten vor einem Kontakt mit Wasser schützt. Das Gehäuse, bevorzugt der innere Teil 151, ist mit einer Vorrichtung, etwa einem Gewinde oder einer Kupplung, ausgestattet, die einen einfachen Anschluss an einen Wasserhahn, einen Duschkopf, einen Duschschlauch oder einen Gartenschlauch ermöglicht. In einer bevorzugten Ausgestaltung der Variante mit externem Anzeigemodul 14 ersetzt das Messmodul, siehe Figur 2 oben, den herkömmlichen Wasserstrahlregler eines Wasserhahns. Das wasserführende innere Teil des Gehäuses 151 hält ein Sieb 153, mit Hilfe dessen die drehbaren Teile vor Verschmutzung geschützt werden. Ein optionaler Wasserstrahlreger 154 kann am Wasserauslass des Gerätes angebracht werden. Weiter kann ein Durchflussbegrenzer 155 angebracht werden, der den Spareffekt des Gerätes weiter verstärkt sowie das Gerät vor zu großen Durchflussmengen schützt.

Ein Anbringungsort des in den Figur 1 und 2 gezeigten Gerätes kann zum Beispiel an einem Wasserhahn sein. Das in Figur 2 gezeigte Gerät kann als Ersatz eines gewöhnlichen Wasserstrahlreglers verwendet werden.

Der Mikrokontroller 16 kann in mehrere Funktionsmodule untergliedert werden, einschließlich eines Moduls zur Messung der Durchflussmenge 161, eines Moduls zur Temperaturmessung 162, eines Moduls zur Abschätzung der aufgewendeten Energiemenge 163; eines Moduls zum Management der Anzeige 164, eines Datenspeichers 165, eines Moduls zum Power Management 166, eines Moduls zum Management der Datenkommunikation 167, eines Moduls zur Erfassung und Auswertung von Benutzereingaben 168, sowie eines Moduls zur Erkennung von zusammengehörenden Entnahmevorgängen 169, wobei einzelne Funktionen auch in anderer Weise zwischen den Modulen aufgeteilt werden können und einzelne Module zu größeren Funktionseinheiten kombiniert werden können.

Das Modul zur Messung der Durchflussmenge 161 ermittelt die Drehfrequenz des Generators 11 und berechnet daraus die Wassermenge, von der das Gerät pro Zeiteinheit durchflossen wird. Indikatoren für die Drehfrequenz sind die erzeugte Spannung sowie die Frequenz der Spannung. Zur Ermittlung der Frequenz der Spannung wird die Zeitdifferenz zwischen zwei Polaritätswechseln bzw. Nulldurchgängen mit definierter Flanke oder zwischen dem Über- bzw. Unterschreiten einer definierten Spannung bei definierter Flanke ermittelt. Dies kann mit Hilfe eines Komparators, eines Logikeinganges oder eines Analog-Digital-Wandlers erfolgen. Alternativ dazu kann auch das Signal mit einem Analog-Digital-Wandler erfasst und dessen digitale Repräsentation mit Hilfe einer Mustererkennung ausgewertet werden. Die Frequenz wird mit gerätespezifischen Multiplikatoren, primär in Abhängigkeit von der gewählten Kanalweite 4 und der Ausgestaltung des Turbinenrades 111 sowie einem möglichen Bypass bei Einsatzgebieten mit hohen Durchflussmengen, in die Durchflussmenge pro Zeiteinheit V_unit übersetzt. Die aufeinanderfolgenden Werte V_unit werden über die Dauer der Entnahme aufsummiert und als Volumen pro Entnahmeprozeß V_ext vorgehalten. Zur Verbesserung der Meßgenauigkeit kann die Trägheit des Rotors durch einen Offset-Wert kompensiert und Nichtlinearitäten mit Hilfe der jeweiligen Kennlinien reduziert werden.

Die Wassertemperatur bei Austritt aus dem Gerät wird mit Hilfe eines Temperatursensors erfasst 12 und mit dem Temperaturmodul 162 ausgewertet. Der Temperatursensor 12 liefert entweder einen analogen Wert, welcher von einem Analog-Digital-wandler digitalisiert wird, oder eine digitale Repräsentation des Messwertes. Das Temperaturmodul 162 liefert den digitalen Wert der aktuellen Wassertemperatur T_act sowie den minimalen Wert T_min während der letzten M Entnahmevorgänge, wobei M eine anwendungsspezifische Konstante zwischen 8 und 1024 ist. T_min wird bei Auslieferung oder nach einem Reset mit einem anwendungsspezifischen Wert zwischen 4 Grad Celsius und 20 Grad Celsius belegt. T_min dient zur Schätzung der Wassertemperatur vor der Erwärmung unter der Annahme, dass während M Entnahmevorgängen mindestens ein Entnahmevorgang von kaltem Wasser erfolgte. Durch diesen Aufbau ist eine genauere Ermittlung der Wärmemenge möglich, ohne einen Sensor im Kaltwasserreservoir integrieren zu müssen. Das Temperaturmodul 162 kann während der Programmierung des Gerätes in einer definierten Umgebung kalibriert werden. Alternativ kann für T_min ein Basiswert festgelegt werden, etwa die mittlere Temperatur, die Wasser bei Abgabe an ein Versorgungsnetz aufweist.

Das Modul zur Erfassung der Energiemenge 163 greift auf das Modul zur Messung des Volumens 161 und das Temperaturmodul 162 zurück, um die Wärmemenge abzuschätzen, die für die Bereitstellung des Warmwassers zugeführt wurde. Hierfür wird jede das Gerät während einer Wasserentnahme durchfließende Wassermenge pro Zeiteinheit V_unit mit der Differenz der in dieser Zeiteinheit gemessenen Temperatur T_act und T_min multipliziert, die einzelnen Produkte aufsummiert und mit der spezifischen Wärmespeicherkapazität von Wasser multipliziert. Die zugeführte Wärmemenge je Entnahmevorgang E_ext wird bei Bedarf korrigiert um einen angenommenen Wirkungsgrad des Wärmetauschers sowie um die Wärmeverluste beim Wassertransport. Wärmeverluste beim Wassertransport können über eine Addition mit einem Wert berücksichtigt werden, der sich aus der Wassertemperatur bei Ende des Entnahmevorganges der entnommenen Wassermenge bis zum Erreichen der Wassertemperatur am Anfang des Entnahmevorganges und der spezifischen Wärmekapazität von Wasser ergibt, was eine Näherung des nach der Entnahme im Rohrsystem verbleibenden Wärmemenge entspricht. Der Wirkungsgrad des Wärmetauschers wird durch eine Multiplikation mit einem Wert grösser eins berücksichtigt. Die aufgewendete Wärmemenge E_ext kann ausgedrückt werden in Wattstunden, Kilowattstunden oder einer anderen Einheit für Energie. E_ext und V_ext können darüber hinaus verwendet werden, um die resultierenden Treibhausgasemissionen eines Entnahmevorganges abzuschätzen. Hierfür wird E_ext mit einer Konstanten multipliziert, welche die Emissionen je Energiemenge, zum Beispiel in Gramm Kohlendioxid-Äquivalent pro Kilowattstunde, für ein System zur Warmwasserbereitung (bei Auslieferung für ein durchschnittliches System, bei Bedarf Anpassung etwa an Ölheizung, Sonnenkollektoren etc.) beschreibt und addiert mit dem Produkt aus V_ext und der durchschnittlichen Emission je Volumeneinheit für die Bereitstellung von Kaltwasser. Die Energiemenge E_ext kann um die Energiemenge zur Bereitstellung von Trinkwasser ergänzt werden, insbesondere durch Addition des Produktes aus V_ext und der durchschnittlichen Energiemenge je Volumeneinheit für die Bereitstellung von Kaltwasser. Die Angabe der Kosten je Wasserentnahme kann über eine Addition des Produktes aus Wärmeenergiemenge der Entnahme und der spezifischen Energiekosten sowie des Produktes aus entnommenem Wasservolumen und Kosten für Frischwasser und Abwasser erfolgen.

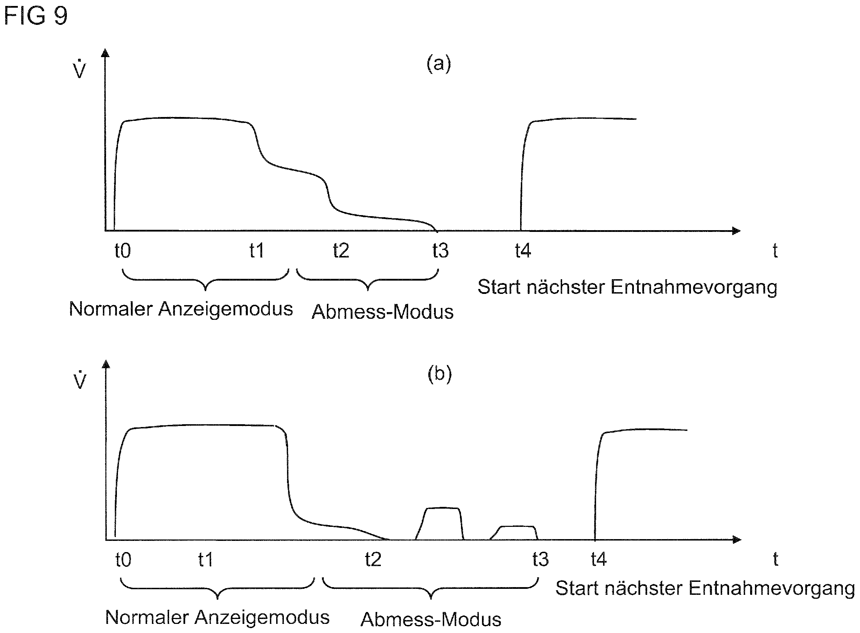

Das Modul zur Steuerung der Anzeige 164 verwendet die Ergebnisse des Moduls zur Messung des Volumens 161, des Temperaturmoduls 162, des Moduls zur Ermittlung der Energiemenge 163, insbesondere einschließlich Kosten und Emissionsdaten, oder eine Kombination daraus, um die Implikationen des laufenden oder kürzlich abgeschlossenen Entnahmevorganges darzustellen. Das Modul 164 kann zwischen zwei oder mehreren Messwerten alternieren oder eine Messgröße bevorzugt beziehungsweise ausschließlich darstellen. Die Auswahl einer bevorzugt dargestellten Messgröße kann voreingestellt sein oder vom Gerät anhand einer Erkennung der relevanten Anwendung automatisch erfolgen. Hierfür dienen insbesondere die momentane Durchflussmenge und die Wassertemperatur als Indikator; wird nur kaltes Wasser entnommen, kann zum Beispiel auf die Anzeige der Wärmemenge verzichtet werden; wird der Wasserfluss durch den Benutzer langsam reduziert, lässt dies auf ein Abmessvorgang schließen, und es wird bevorzugt die das entnommene Volumen beschreibende Größe angezeigt, siehe Figur 9.

Das Speichermodul 165 besteht bevorzugt aus einem nichtvolatilen Datenspeicher, der im Mikrokontroller 16 integriert ist. Das Modul 165 wird verwendet, um die minimale Wassertemperatur T_min der vergangenen M Entnahmevorgänge zu ermitteln und zu speichern. Darüber hinaus werden abgelegt T_act, V_ext, and E_ext. Ebenso können gespeichert werden Durchschnittswerte und akkumulierte Messgrößen aus mehreren vergangenen Messperioden, um Trends im Benutzerverhalten zu erfassen. Das Speichermodul 165 kann darüber hinaus die Programmvariablen speichern. Für aufwendigere Auswertungsverfahren können auch Daten zu den einzelnen Entnahmevorgängen abgelegt werde. Wenn für den Aufbau vorteilhaft, kann das Speichermodul 165 auch als externer Baustein integriert werden.

Das Modul zur Leistungssteuerung 166, englisch Module for Power Management, erkennt kritische Zustände der Versorgungsspannung VDD zum Beispiel wegen einer zu niedrigen Drehfrequenz des Generators 11 und daraus resultierend einer zu erwartenden Entladung der Glättungskondensatoren C1, C31, C32. Das Modul 166 leitet in diesem Falle eine Sicherung der Programmvariablen und der aktuellen Messwerte im Speichermodul 165 ein, bringt den Mikrokontroller 16 in einen definierten Zustand und sorgt nach einem erneuten Spannungsanstieg für eine Wiederherstellung des Betriebszustandes.

Das bei internem Anzeigemodul 14 optionale Kommunikationsmodul 167 dient als Datenschnittstelle zu einem externen Gerät, was bei Bedarf eine umfassendere Speicherung, Auswertung und Anzeige der Verbrauchsdaten ermöglicht. Mögliche Übertragungstechniken sind optische oder hochfrequenzbasierte Verfahren, englisch radio-frequency based methods, bei denen Daten über amplitude shift keying, abgekürzt ASK, differential phase shift keying, abgekürzt DPSK, on-off keying, abgekürzt OOK, oder kombinierte Modulationstechniken übertragen werden. In einer bevorzugten Konfiguration dient die Hintergrundbeleuchtung 141 als Sender, wobei das Kommunikationsmodul 167 des Mikrokontrollers 16 eine Modulation dann vornimmt, wenn die Generatorspannung in Durchlassrichtung grösser ist als die Durchlassspannung der LED D3. Um die Einschaltdauer der Diode D3 zu maximieren, wird die Diode D3 in einer bevorzugten Konfiguration nicht mit Hilfe eines seriellen sondern eines parallel geschalteten Transistors T1 ein- bzw. ausgeschaltet siehe Figur 6.

Figur 6 zeigt ein mögliches Schaltbild des Gleichrichter-Moduls mit der optionalen Konfiguration zur optischen Datenübertragung des in Figur 1 beschriebenen Gerätes beziehungsweise des beschriebenen Verfahrens. Anstelle der Diode D3 können optional zwei LEDs zur Nutzung beider Halbwellen und zum Schutz vor zu hohen Sperrspannungen eingesetzt werden. Die Diode D2 kann optional durch einen Brückengleichrichter ersetzt werden.

Das optionale Benutzereingabemodul 168 gestattet es, bestimmte Parameter zu definieren bzw. auszuwählen und so die Genauigkeit der Messungen und Berechnungen zu verbessern. Der Benutzer kann so die bei der Bereitung von Warmwasser verwendete Wärmequelle, insbesondere Ölheizung, Gasheizung, elektrischer Durchlauferhitzer, Sonnenkollektoren usw., wählen und die Parameter bezüglich der Emissionsdaten und Kosten festlegen. Auch können die Kosten für Frisch- und Abwasser eingegeben werden. Weiter ist es unter Umständen erforderlich, gewünschte Anzeigemodi oder bestimmte Einheiten der Messgrößen auszuwählen bzw. das Gerät in den bei der Auslieferung eingestellten Zustand zu bringen "Reset". Das Input-Modul 168 kann ebenfalls dazu dienen, das Gerät, insbesondere die Module zur Temperatur- und Durchflussmessung 161, 162, zu kalibrieren. Der Benutzereingabemodus kann über eine definierte Abfolge von kurzen und langen Wasserentnahmen "Sequenzen" aktiviert werden. Ist der Benutzereingabemodus aktiviert, können einzelne Parameter bzw. Menüoptionen über definierte Sequenzen angewählt und verändert werden.

Das Modul zur Erkennung von zusammengehörenden Entnahmevorgängen 169 erkennt und fasst Wasserentnahmen zusammen, welche mit hoher Wahrscheinlichkeit zu einem Entnahmevorgang gehören beziehungsweise initiiert neue Messungen, wenn Wasserentnahmen mit größerer Wahrscheinlichkeit neuen Entnahmevorgängen zuzurechnen sind. Dies ermöglicht es, Messungen automatisch einzelnen Tätigkeiten oder Arbeitsschritten eines Benutzers zuzuordnen und deren Ergebnisse so aufzubereiten, dass keine Berechnungen seitens des Benutzers erforderlich sind, was den wahrgenommenen Wert der Informationen erhöht. Hierfür fasst das Gerät die Messwerte zu einzelnen Entnahmen additiv zusammen, wenn die Zeitspanne zwischen zwei Entnahmen kleiner ist als der Wert t_diff, wobei t_diff in einer bevorzugten Konfiguration in Abhängigkeit vom laufenden oder vorherigen Entnahmevorgang V_ext sowie in Abhängigkeit von der Wassertemperatur T_act dynamisch gewählt wird. Alternativ kann t_diff als statischer Parameter festgelegt werden. Weiter können charakteristische Zeitspannen für typische Tätigkeiten als Basis für eine Gruppierung bzw. Separierung von Entnahmevorgängen dienen, z.B. Händewaschen t_diff < 120 sec; Zähneputzen t_diff < 240 sec; Duschen t_diff < 240 sec; Geschirrspülen t_diff < 360 sec. Allgemein soll für t_diff gelten 1 sec < t_diff < 5 min. Wird bei einem laufenden Entnahmevorgang eine große Wassermenge entnommen, etwa über 10 Liter, werden für t_diff tendenziell größere Werte angenommen wie 2 sec < t_diff < 15 min. Befindet sich das Gerät im Abmess-Modus, führt eine vom Benutzer eingeführte erneute Entnahme mit hoher Durchflussmenge pro Zeit bereits bei einem Wert von 1 sec < t_diff < 1 min zu einer Zuordnung zu einem neuen Entnahmevorgang, siehe Figur 9.

In einer bevorzugten Konfiguration dient ein Zähler des Mikrokontrollers 16 als Zeitbasis zur Ermittlung der Zeit zwischen zwei Entnahmen, so dass auf eine Echtzeituhr verzichtet werden kann. Zwischen zwei Entnahmevorgängen ist es möglich, dass die in den Glättungskondensatoren des Gleichrichtermoduls 13 gespeicherte Ladung nicht für den Betrieb des Zählers ausreicht und - bei einem Verzicht auf eine Echtzeituhr - keine Zeitbasis zur Verfügung steht. In diesem Falle kann die Spannungsdifferenz an einem sich definiert entladendem Kondensators kurz vor dem Ausschalten des Mikrokontrollers 16 und kurz nach dessen erneutem Einschalten mit Hilfe eines Analog-Digital-Wandlers erfasst werden und zur Abschätzung der Zeitdifferenz zwischen dem Aus- und Einschaltvorgang herangezogen werden. Alternativ dazu kann die Wassertemperatur kurz vor dem Ausschalten erfasst und mit der Wassertemperatur kurz nach dem erneuten Einschalten verglichen werden. Unter der Annahme einer Angleichung an die Umgebungstemperatur kann so ebenfalls auf die Zeitdifferenz geschlossen werden. Die Verfahren der Ermittlung des Ladezustandes und der Temperatur können miteinander kombiniert werden.

Die Peripheriebauteile 17 unterstützen den Betrieb der zuvor erwähnten Bauteile.

Eine vorteilhafte Ausgestaltung der Erfindung wird erreicht durch eine Aufteilung von Mess- und Anzeigeeinheit; der schematische Aufbau sowie das Blockdiagramm sind in den Figuren 2 und 5 dargestellt. Dadurch lassen sich insbesondere kleinere Bauformen der an der Entnahmestelle anzubringenden Einheit realisieren, die leichter in bestehende Entnahmestellen zu integrieren sind; weiter lässt sich die Anbringung der Anzeigeeinheit im Sichtfeld des Benutzers auf einfache Weise erreichen. Bevorzugte Übertragungstechniken sind optische oder Hochfrequenz-basierte Verfahren, bei denen Daten über amplitude shift keying, abgekürzt ASK, differential phase shift keying, abgekürzt DPSK, on-off keying, abgekürzt OOK, oder kombinierte Modulationstechniken übertragen werden. Die zur Übertragung der Daten erforderliche Energie lässt sich reduzieren, indem für die Kodierung der Daten sowohl die Amplitude als auch die zeitlichen Abstände zwischen zwei Amplituden variiert werden.

Insbesondere auf Grund der eingeschränkten, zur Übertragung eines Datenpaketes verfügbaren elektrischen Energie muss die je Datenpaket zu übertragende Datenmenge so klein wie möglich gehalten werden; gleichzeitig müssen, da ebenfalls die Anzahl der Datenpakete, die je Zeiteinheit übertragenden werden können, eingeschränkt ist, einzelne Datenpakete möglichst viele Informationen enthalten. Je nach Einsatzort bzw. Umgebungsbedingungen eines das beschriebene Verfahren anwendenden Gerätes kann es vorteilhaft sein, Daten oder Datenpakete zu übertragen, die eine Anzeige oder Berechnung der Verbrauchsinformationen ohne Kenntnis zuvor übertragener Informationen ermöglichen; dies gilt insbesondere dann, wenn der Übertragungskanal in starkem Masse störanfällig ist; oder es kann vorteilhaft sein, Daten zu übertragen, die eine Anzeige oder Berechnung der Verbrauchsinformationen bei Kenntnis der zuvor übertragenen Daten ermöglichen, was eine Reduktion des Datenvolumens je Datenpaket ermöglicht. Dies ist insbesondere dann vorteilhaft, wenn die Bandbreite des Übertragungssystems stark eingeschränkt ist oder eine Aktualisierung der Anzeige mit hoher Frequenz erfolgen soll. Darüber hinaus kann eine Kombination beider Verfahren vorteilhaft sein, bei der zum Beispiel Daten, die eine Anzeige oder Berechnung der Verbrauchsinformationen ohne Kenntnis zuvor übertragener Informationen ermöglichen, mit einer Folge von Daten, die eine Anzeige oder Berechnung der Verbrauchsinformationen bei Kenntnis der zuvor übertragene Daten ermöglichen, abwechselnd übertragen werden. Dies begünstigt eine Aktualisierung der Anzeige mit hoher Frequenz bei reduziertem zu übertragenden Datenvolumen und bei gleichzeitiger Reduktion der Wahrscheinlichkeit einer über längere Zeit fehlerhaften Anzeige.

Weiter können Adressinformationen übertragen werden, die eine Identifikation unterschiedlicher Messmodule erlauben, oder es kann eine Differenzierung der Daten, die von unterschiedlichen Messmodulen gesendet werden, anhand der Daten selbst erfolgen. Werden zum Beispiel fortlaufend Zählerstände oder Temperaturwerte mit ausreichender zeitlicher Auflösung übertragen, kann eine Differenzierung unter der Annahme der Stetigkeit der Werte anhand der Werte selbst oder der Werte zusammen mit deren zeitlicher Ableitung erster oder höherer Ordnung des zeitlichen Verlaufes der Werte erfolgen.

Weiter kann die Größe eines Datenwortes, gegeben Falles unter Verzicht auf Redundanzen zur Fehlerkorrektur, Genauigkeit oder zeitlicher Auflösung in Abhängig von der dem Sender zur Verfügung stehenden Energie angepasst werden. So können zum Beispiel bei geringer Durchflussmenge je Zeiteinheit (und damit verbunden einer relativ geringen, zur Datenübertragung zur Verfügung stehenden Energie) Daten als 3 bis 6 Bit lange Datenpakete übertragen werden, und bei hoher Durchflussmenge je Zeiteinheit (und damit verbunden einer relativ hoher, zur Datenübertragung zur Verfügung stehenden Energie) können Daten als 4 bis 16 Bit lange Datenpakete übertragen werden. Die Länge der Datenpakete selbst kann hierbei als dem Empfänger zur Verfügung stehende Information zur Unterstützung der Interpretation der Datenpakete dienen.

In einer bevorzugten Ausgestaltung folgen Synchronisationsinformationen, wie etwa absolute Messwerte, mit einer Wortlänge von 4 oder mehr Bit, die gegebenenfalls auf mehrere Datenpakete verteilt sind, auf mehrere, der Aktualisierung dienende Informationen mit einer relativ kurzen Wortlänge von 1 bis 16 Bit. In einer bevorzugten Ausgestaltung werden nach dem oben beschrieben Verfahren Informationen zum Volumen des die Apparatur durchströmenden Fluides als binäre Datenpakete übertragen, und die Temperatur des Fluides wird als zeitlicher Abstand zwischen zwei oder mehreren der zu übertragenden Bits kodiert. Ebenfalls können nach dem oben beschriebenen Verfahren Informationen zur Temperatur des die Apparatur durchströmenden Fluides als binäre Datenpakete übertragen werden und das Volumen des Fluides als zeitlicher Abstand zwischen zwei oder mehreren der zu übertragenden Bits kodiert werden.

Bestehende Verfahren zur Ermittlung des Ressourcen-Verbrauches bei der Verwendung von warmem oder kaltem Wasser fördern nicht eine einfache Bewertung des persönlichen Verhaltens seitens des Nutzers, da Verbrauchsinformationen nicht auf Ebene einzelner Tätigkeiten angezeigt werden. Dies schränkt mögliche Lerneffekte bezüglich eines sparsamen Umgangs mit der Ressource ein.

Es ist ein Verfahren angegeben, mit dessen Hilfe am Ort der Entnahme eines Fluides oder am Ort der Steuerung eines Entnahmevorganges die aus dem Verbrauch resultierenden Auswirkungen auf die Umwelt sowie entstehenden Kosten ermittelt und anzeigt werden. Insbesondere werden mit Hilfe einer Mustererkennung zusammenhängende Entnahmevorgänge erkannt, so dass eine zeitnahe und tätigkeitsbezogene Bewertung des Verhaltens erfolgen kann. Die dem Fluid zugeführte Wärmeenergiemenge wird mit Hilfe nur eines Temperatursensors im Gerät und Schätzung der Temperatur vor der Wärmebehandlung ermittelt. Die Verbrauchsinformationen werden gegebenenfalls in Kombination mit Vergleichsinformationen oder Informationen zur zeitlichen Entwicklung des Ressourcen-Verbrauches angezeigt.

Bei einem Großteil der Benutzer fördert die Angabe von Verbrauchsinformationen auf Ebene einzelner Tätigkeiten einen sparsamen Umgang mit ebendiesen Ressourcen und reduziert somit den Verbrauch sowie die resultierenden Umwelteffekte.

## Patentansprüche

1. Anordnung zur Ermittlung des Ressourcen-Verbrauchs, umfassend
- einen Generator (11) zur Erzeugung einer Ausgangsspannung mittels eines durch die Anordnung während einer Entnahmeeinheit fließenden Wassers, wobei der Generator (11) ein Turbinenrad (111) umfasst, das ausgelegt ist, von dem durch die Anordnung fließenden Wasser in eine Rotationsbewegung versetzt zu werden, und der Generator (11) ausgelegt ist, die Ausgangsspannung des Generators (11) derart zu erzeugen, dass die Ausgangsspannung des Generators (11) zum Betrieb einer Elektronikkomponente (13, 16, 17) ausreicht,
- einen Temperatursensor (12) zur Abgabe eines Temperatursignals, welches von einer Temperatur des Wassers abhängt, und
- die Elektronikkomponente (13, 16, 17), die einen Mikrokontroller (16) umfasst,
**dadurch gekennzeichnet, dass**
die Elektronikkomponente (13, 16, 17) ausgelegt ist,
- aus der Ausgangsspannung des Generators (11) eine Wassermenge des durch die Anordnung während der Entnahmeeinheit fließenden Wassers zu ermitteln, wobei die Entnahmeeinheit ein Einzelentnahmevorgang oder, sofern die Einzelentnahmevorgänge in einem zeitlichen Abstand erfolgen, der kleiner als ein vorgegebenes Zeitfenster ist, ein sich aus mehreren Einzelentnahmevorgängen zusammensetzender Gesamtentnahmevorgang ist, und
- in Abhängigkeit von dem Temperatursignal und der Ausgangsspannung des Generators (11) ein Signal zur Angabe des Ressourcen-Verbrauchs bereitzustellen,
wobei die Elektronikkomponente (13, 16, 17) ausgelegt ist,
das Signal zur Angabe des Ressourcen-Verbrauchs in Abhängigkeit zusätzlich von einer Grundtemperatur bereitzustellen und als Grundtemperatur eine gemessene niedrigste Temperatur während einer Anzahl M vorausgegangener Einzelentnahmevorgänge oder ein Basiswert festgelegt ist, und
wobei die Bestimmung der Wärmemenge, die für eine mögliche Erwärmung des Wassers aufgebracht wurde, auf Basis des einzelnen Temperatursensors (12) und des Mikrokontrollers (16), die beide in einem Gerät untergebracht sind, erfolgt.

2. Anordnung nach Anspruch 1,
bei der die Anordnung ausgelegt ist, als die Wassermenge der Entnahmeeinheit die Wassermenge eines ersten und eines zweiten Einzelentnahmevorgangs jeweils getrennt zu ermitteln, wenn der erste und der zweite Einzelentnahmevorgang in einem zeitlichen Abstand erfolgen, der größer als das vorgegebene Zeitfenster ist.

3. Anordnung nach Anspruch 1 oder 2,
bei der der Mikrokontroller (16) ausgelegt ist, Einzelentnahmevorgänge zu einem Gesamtentnahmevorgang mittels einer Auswertung einer Dauer von Einzelentnahmevorgängen und der zeitlichen Abstände zwischen zwei oder mehr Einzelentnahmevorgängen zu gruppieren.

4. Anordnung nach einem der Ansprüche 1 bis 3,
bei der das Turbinenrad (111) aus magnetisiertem Material hergestellt ist oder mit mindestens einem Magnet (113) verbunden ist.

5. Anordnung nach einem der Ansprüche 1 bis 4,
umfassend ein inneres Gehäuse (151), wobei der Generator (11) mindestens eine Spule (114) umfasst und die mindestens eine Spule (114) auf einer wasserabgewandten Seite des inneren Gehäuses (151) derart angebracht ist, dass die mindestens eine Spule (114) bei der Rotationsbewegung von einem wechselnden magnetischen Feld durchflossen ist.

6. Anordnung nach einem der Ansprüche 1 bis 5,
umfassend ein Anzeigemodul (14) für eine Anzeige des Signals zur Angabe des Ressourcen-Verbrauchs.

7. Wasserentnahmevorrichtung, insbesondere Wasserhahn, Duschkopf, Duschschlauch, Mischbatterie, Gartenschlauch oder Wasserleitung, umfassend eine Anordnung nach einem der Ansprüche 1 bis 6.

8. Verfahren zur Ermittlung des Ressourcen-Verbrauchs bei der Nutzung eines einem Entnahmeort entnommenen Wassers unter Berücksichtigung einer Wassermenge und dieser zugeordneter Temperaturwerte anhand einer Anordnung, umfassend
- einen Generator (11),
- einen Temperatursensor (12), und
- elektronische Komponenten (13, 16, 17), die einen Mikrokontroller (16) umfassen,
wobei der Generator (11) ein Turbinenrad (111) umfasst, das vom das Gerät durchströmenden Wasser in eine Drehbewegung versetzt wird, und zur Ermittlung des Ressourcen-Verbrauchs die dem Entnahmeort während einer Entnahmeeinheit entnommene Wassermenge ermittelt wird,
**dadurch gekennzeichnet, dass**
die Entnahmeeinheit ein Einzelentnahmevorgang oder ein Gesamtentnahmevorgang ist, der sich aus mehreren Einzelentnahmevorgängen zusammensetzt, und die Wassermenge
- entweder die Wassermenge des Einzelentnahmevorgangs
- oder die Wassermenge des Gesamtentnahmevorgangs ist,
- dass der Gesamtentnahmevorgang dann berücksichtigt wird, wenn die Einzelentnahmevorgänge in einem zeitlichen Abstand erfolgen, der kleiner als ein vorgegebenes Zeitfenster ist,
- dass jeder Einzelentnahmevorgang in Zeiteinheiten zugeordnete Teilentnahmevorgänge unterteilt wird,
- dass für jeden Teilentnahmevorgang eine mittlere Temperatur des entnommenen Wassers als Ist-Temperatur ermittelt wird,
- dass aus der Differenz zwischen der Ist-Temperatur und einer Grundtemperatur ein Temperaturwert pro Zeiteinheit ermittelt wird und
- dass aufgrund der während der Entnahmeeinheit gemessenen Wassermenge sowie der während der Entnahmeeinheit ermittelten Temperaturwerte der Ressourcen-Verbrauch ermittelt wird, wobei eine Ausgangsspannung des Generators (11) sowohl als Indikator für die Durchflussmenge als auch zur Spannungsversorgung der elektronischen Komponenten (13, 16, 17) dient, wobei als Grundtemperatur eine gemessene niedrigste Temperatur während einer Anzahl M vorausgegangenen Einzelentnahmevorgängen oder ein Basiswert festgelegt wird,
und
die Bestimmung der Wärmemenge, die für eine mögliche Erwärmung des Wassers aufgebracht wurde, auf Basis des einzelnen Temperatursensors (12) und des Mikrokontrollers (16), die beide in einem Gerät untergebracht sind, erfolgt.

9. Verfahren nach Anspruch 8,
**dadurch gekennzeichnet,**
**dass** als Zeitfenster eine Zeit t mit 1 sec ≤ t ≤ 5 min festgelegt wird.

10. Verfahren nach Anspruch 8 oder 9,
**dadurch gekennzeichnet,**
**dass** die Verbrauchsinformationen Angaben zum entnommenen Wasservolumen umfassen.

11. Verfahren nach zumindest einem der Ansprüche 8 bis 10,
**dadurch gekennzeichnet,**
**dass** die Informationen Angaben zu der bei der Warmwasserbereitung aufgewendeten Energiemenge umfassen.

12. Verfahren nach zumindest einem der Ansprüche 8 bis 11,
**dadurch gekennzeichnet,**
**dass** der Wasserfluss durch das Gerät das Turbinenrad (111) antreibt, das selbst magnetisiert ist oder starr mit Permanentmagneten verbunden ist, wodurch bei der Drehbewegung des Turbinenrades (111) ein wechselndes magnetisches Feld in einer oder mehreren Spulen (114) erzeugt wird und so eine Wechselspannung induziert wird, deren zeitlicher Verlauf als Indikator für die Durchflussmenge dient und die darüber hinaus das Gerät mit elektrischer Energie versorgt.

13. Verfahren nach zumindest einem der Ansprüche 8 bis 12,
**dadurch gekennzeichnet,**
**dass** eine Versorgungsspannung mit Hilfe von Leuchtdioden begrenzt wird, die zur Beleuchtung der Anzeige verwendet werden.

## Claims

1. Arrangement for determining resource consumption, comprising
- a generator (11) for generating an output voltage by means of water flowing through the arrangement during a withdrawal unit, wherein the generator (11) comprises a turbine wheel (111) that is designed to be set into rotational motion by the water flowing through the arrangement and the generator (11) is designed to generate the output voltage of the generator (11) in such a manner that the output voltage of the generator (11) is sufficient to operate an electronics component (13, 16, 17),
- a temperature sensor (12) for providing a temperature signal that depends on a temperature of the water, and
- the electronics component (13, 16, 17), which comprises a microcontroller (16),
**characterized in that**
the electronics component (13, 16, 17) is designed
- to determine from the output voltage of the generator (11) a water quantity of the water flowing through the arrangement during the withdrawal unit, wherein the withdrawal unit is an individual withdrawal process or an overall withdrawal process composed of several individual withdrawal processes if the individual withdrawal processes take place in a time interval that is smaller than a predetermined time window, and
- to provide a signal indicating the resource consumption depending on the temperature signal and the output voltage of the generator (11),
wherein the electronics component (13, 16, 17) is designed to provide the signal for indicating the resource consumption also depending on a base temperature, and a measured lowest temperature during a number M of preceding individual withdrawal processes, or a base value is defined as the base temperature, and
wherein the heat amount expended for a potential heating of the water is determined based on the individual temperature sensor (12) and the microcontroller (16), which are both integrated in one device.

2. The arrangement according to claim 1,
in which the arrangement is designed to determine the water quantity of a first and a second individual withdrawal process separately as the water quantity of the withdrawal unit, if the first and the second withdrawal process take place with a time interval that is larger than the predetermined time window.

3. Arrangement according to claim 1 or 2,
in which the microcontroller (16) is designed to combine individual withdrawal processes into an overall withdrawal process by means of an evaluation of a duration of individual withdrawal processes and the time intervals between two or more individual withdrawal processes.

4. Arrangement according to one of claims 1 to 3,
in which the turbine wheel (111) is produced from magnetized material or is connected to at least one magnet (113).

5. Arrangement according to one of claims 1 to 4, comprising an interior housing (151), wherein the generator (11) comprises at least one coil (114) and the at least one coil (114) is mounted on a side of the interior housing (151) facing away from the water such that an alternating magnetic field flows through the at least one coil (114) during the rotational motion.

6. Arrangement according to one of claims 1 to 5, comprising a display module (14) for a display of the signal for indicating the resource consumption.

7. Water withdrawal device, in particular a water faucet, shower head, shower hose, mixing tap, garden hose or water line comprising an arrangement according to one of Claims 1 to 6.

8. Method for determining resource consumption in the usage of water withdrawn at a withdrawal site taking into account a quantity of water and temperature values associated with the quantity of water by means of an arrangement, comprising
- a generator (11),
- a temperature sensor (12), and
- electronic components (13, 16, 17), which include a microcontroller (16),
wherein the generator (11) includes a turbine wheel (111), which is set into rotational motion by the water flowing through the device, and the quantity of water withdrawn at the withdrawal site during a withdrawal unit is acquired to determine the resource consumption,
**characterized in that**
the withdrawal unit is an individual withdrawal process or an overall withdrawal process composed of several individual withdrawal processes, and the quantity of water
- is either the quantity of water of the individual withdrawal process
- or the quantity of water of the overall withdrawal process,
- **in that** the overall withdrawal process is taken into account if the individual withdrawal processes take place with a time interval that is smaller than a predetermined time window,
- **in that** each individual withdrawal process is subdivided into partial withdrawal processes associated with time units,
- **in that** an average temperature of the withdrawn water is determined as the actual temperature for each partial withdrawal process,
- **in that** a temperature value per time unit is determined from the difference between the actual temperature and a base temperature, and
- **in that** the resource consumption is determined based on the water quantity measured during the withdrawal unit as well as the temperature values determined during the withdrawal unit,
wherein an output voltage of the generator (11) serves as an indicator of both the flow amount and for the voltage supply of the electronics components (13, 16, 17), wherein a measured lowest temperature during a number M of preceding individual withdrawal processes, or a base value is defined as the base temperature,
and
the heat amount expended for a potential heating of the water is determined based on the individual temperature sensor (12) and the microcontroller (16), which are both integrated in one device.

9. Method according to claim 8,
**characterized in that**
a time t with 1 sec ≤ t ≤ 5 min is defined as the time window.

10. Method according to claim 8 or 9,
**characterized in that**
the consumption information comprises data on the withdrawn volume of water.

11. Method according to at least one of claims 8 to 10,
**characterized in that**
the information comprises data on the quantity of energy expended in providing hot water.

12. Method according to at least one of claims 8 to 11,
**characterized in that**
the water flow through the device drives the turbine wheel (111) that is *per se* magnetized or is rigidly connected to permanent magnets, whereby an alternating magnetic field is generated in one or more coils (114) during the rotational motion of the turbine wheel (111) and thus an AC voltage is induced, whose curve over time serves as an indicator for the flow amount and that additionally supplies the device with electrical energy.

13. Method according to at least one of claims 8 to 12,
**characterized in that**
a supply voltage is limited with the aid of light-emitting diodes that are used for lighting the display.

## Revendications

1. Agencement permettant de déterminer la consommation de ressources, comprenant
- un générateur (11) destiné à générer une tension de sortie au moyen d'une eau circulant à travers l'agencement au cours d'une séquence de prélèvement, le générateur (11) comprenant une roue de turbine (111), qui est adapté à être déplacée dans un mouvement de rotation par l'eau circulant à travers l'agencement et le générateur (11) étant adapté à produire la tension de sortie du générateur (11) de sorte que la tension de sortie du générateur (11) suffise au fonctionnement d'un composant électronique (13, 16, 17),
- un capteur de température (12) destiné à émettre un signal de température qui dépend d'une température de l'eau et
- le composant électronique (13, 16, 17) qui comprend un microcontrôleur (16),
**caractérisé en ce que**
le composant électronique (13, 16, 17) est adapté
- à déterminer à partir de la tension de sortie du générateur (11) une quantité d'eau circulant à travers l'agencement au cours de la séquence de prélèvement, la séquence de prélèvement étant une opération de prélèvement individuelle ou, dans la mesure où les opérations de prélèvement individuelles sont effectuées dans un intervalle de temps, inférieur à la fenêtre de temps prédéterminée, une opération de prélèvement globale qui se compose de plusieurs opérations de prélèvement individuelles, et
- pour fournir, en fonction du signal de température et de la tension de sortie du générateur (11), un signal indiquant la consommation de ressources,
le composant électronique (13, 16, 17) étant adapté à fournir le signal indiquant la consommation de ressources en fonction en plus d'une température de base et la température la plus basse mesurée durant un nombre M d'opérations de prélèvement individuelles précédentes ou une valeur de base étant définies en tant que température de base, et
la détermination de la quantité de chaleur appliquée pour un éventuel chauffage de l'eau est effectuée sur la base du capteur de température individuel (12) et du microcontrôleur (16), qui sont tous deux logés dans un appareil.

2. Agencement selon la revendication 1,
dans lequel l'agencement est adapté à déterminer à chaque fois de manière distincte la quantité d'eau d'une première et d'une deuxième opérations de prélèvement individuelles comme étant la quantité d'eau de la séquence de prélèvement lorsque la première et la deuxième opérations de prélèvement individuelles sont effectuées dans un intervalle de temps supérieur à la fenêtre de temps prédéterminée.

3. Agencement selon la revendication 1 ou 2,
dans lequel le microcontrôleur (16) est adapté à grouper les opérations de prélèvement individuelles en une opération de prélèvement globale au moyen d'une évaluation d'une durée des opérations de prélèvement individuelles et des intervalles de temps entre au moins deux opérations de prélèvement individuelles.

4. Agencement selon l'une quelconque des revendications 1 à 3,
dans lequel la roue de turbine (111) est réalisée en un matériau magnétique ou est reliée à au moins un aimant (113).

5. Agencement selon l'une quelconque des revendications 1 à 4,
comprenant un boîtier interne (151), le générateur (11) comprenant au moins une bobine (114) et la au moins une bobine (114) étant fixée sur le côté opposé à l'eau du boîtier interne (151) de sorte que pendant le mouvement de rotation, la au moins une bobine (114) soit traversée par un champ magnétique oscillant.

6. Agencement selon l'une quelconque des revendications 1 à 5,
comprenant un module d'affichage (14) pour afficher le signal indiquant la consommation de ressources.

7. Dispositif de prélèvement d'eau, notamment robinet, pomme de douche, tuyau de douche, mitigeur, tuyau d'arrosage ou conduite d'eau, comprenant un agencement selon l'une quelconque des revendications 1 à 6.

8. Procédé destiné à déterminer la consommation de ressources lors de l'utilisation d'une eau prélevée sur un site de prélèvement, en tenant compte d'une quantité d'eau et des valeurs de température associées à ceci, au moyen d'un agencement comprenant,
- un générateur (11),
- un capteur de température (12), et
- les composants électroniques (13, 16, 17) comprenant un microcontrôleur (16),
dans lequel le générateur (11) comprend une roue de turbine (111), qui est entrainée par l'eau circulant à travers le dispositif en un mouvement de rotation et la quantité d'eau prélevée sur le site de prélèvement durant une séquence de prélèvement est déterminée en vue de déterminer la consommation des ressources,
**caractérisé en ce que**
la séquence de prélèvement est une opération de prélèvement individuelle ou une opération de prélèvement globale qui se compose de plusieurs opérations de prélèvement individuelles, et la quantité d'eau est
- soit la quantité d'eau de l'opération de prélèvement individuelle
- soit la quantité d'eau de l'opération de prélèvement globale,
- **en ce que** l'opération de prélèvement globale est ensuite prise en compte lorsque les opérations de prélèvement individuelles sont effectuées dans un intervalle de temps, inférieur à une fenêtre de temps prédéterminée,
- **en ce que** chaque opération de prélèvement individuelle est sous-divisée en opérations de prélèvement partielles allouées à des séquences de temps,
- **en ce qu'**une température moyenne de l'eau prélevée est déterminée pour chaque opération de prélèvement partielle comme température réelle,
- **en ce qu'**une valeur de température par unité de temps est déterminée à partir de la différence entre la température réelle et une température de base, et
- **en ce qu'**en raison de la quantité d'eau mesurée durant la séquence de prélèvement ainsi que des valeurs de température déterminées durant la séquence de prélèvement, la consommation de ressources est déterminée,
une tension de sortie du générateur (11) servant aussi bien d'indicateur pour la capacité de débit que pour l'alimentation en tension des composants électroniques (13, 16, 17),
la température la plus basse mesurée durant un nombre M d'opérations de prélèvement individuelles précédentes ou une valeur de base étant définies en tant que température de base et
la détermination de la quantité de chaleur appliquée pour un éventuel chauffage de l'eau est effectuée sur la base du capteur de température individuel (12) et du microcontrôleur (16), qui sont tous deux logés dans un appareil.

9. Procédé selon la revendication 8,
**caractérisé en ce qu'**un temps t de 1 sec ≤ t ≤ 5 min est défini comme la fenêtre de temps.

10. Procédé selon la revendication 8 ou 9,
**caractérisé en ce que**
les informations sur la consommation comprennent des données sur le volume d'eau prélevé.

11. Procédé selon au moins l'une quelconque des revendications 8 à 10,
**caractérisé en ce que**
les informations comprennent des données sur la quantité d'énergie appliquée pendant la production d'eau chaude.

12. Procédé selon au moins l'une des revendications 8 à 11,
**caractérisé en ce que**
le débit d'eau s'écoulant à travers le dispositif propulse la roue de turbine (111) qui est elle-même magnétisée ou reliée à des aimants permanents de manière rigide, ainsi produire, lors du mouvement de rotation de la roue de turbine (111) dans une ou plusieurs bobines (114), un champ magnétique oscillant et donc une tension alternative est ainsi induite, dont l'évolution dans le temps sert d'indicateur pour le débit et qui alimente en outre le dispositif en énergie électrique.

13. Procédé selon au moins l'une des revendications 8 à 12,
**caractérisé en ce qu'**une tension d'alimentation est limitée au moyen de diodes électroluminescentes qui sont utilisées pour éclairer l'affichage.
